(19) 

(11) **EP 3 967 514 B1**

(12) **EUROPEAN PATENT SPECIFICATION**

(45) Date of publication and mention of the grant of the patent:
**02.09.2026 Bulletin 2026/36**

(21) Application number: **20814955.9**

(22) Date of filing: **07.05.2020**

(51) International Patent Classification (IPC):
***B60C 1/00*** *(2006.01)* ***C08L 9/06*** *(2006.01)*
***B60C 11/00*** *(2006.01)* ***C08K 3/00*** *(2018.01)*
***C08C 19/25*** *(2006.01)* ***C08C 19/44*** *(2006.01)*

(52) Cooperative Patent Classification (CPC):
(C-Sets available)
**C08C 19/25; B60C 1/0016; B60C 11/005; C08C 19/44;** B60C 2011/0016; B60C 2011/0033
(Cont.)

(86) International application number:
**PCT/JP2020/018503**

(87) International publication number:
**WO 2020/241191 (03.12.2020 Gazette 2020/49)**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2019 JP 2019099429**

(43) Date of publication of application:
**16.03.2022 Bulletin 2022/11**

(73) Proprietor: **Sumitomo Rubber Industries, Ltd.**
**Kobe-shi, Hyogo 651-0072 (JP)**

(72) Inventors:
- **OSHIMO, Masaki**
  **Kobe-shi, Hyogo 651-0072 (JP)**
- **MATSUI, Ryoji**
  **Kobe-shi, Hyogo 651-0072 (JP)**
- **HAMADA, Toshiaki**
  **Kobe-shi, Hyogo 651-0072 (JP)**

(74) Representative: **Manitz Finsterwald**
**Patent- und Rechtsanwaltspartnerschaft mbB**
**Ganghoferstraße 29**
**80339 München (DE)**

(56) References cited:
**EP-A1- 2 871 211**
**JP-A- 2000 062 414**
**JP-A- 2009 161 072**
**JP-A- 2015 059 140**
**JP-A- 2015 098 561**
**JP-A- 2018 016 768**
**JP-A- H10 100 613**
**US-A1- 2010 078 853**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/10, C08F 4/48;**
**C08L 9/06, C08L 9/00, C08L 45/02, C08L 91/06, C08K 3/04, C08K 3/36, C08K 5/548, C08K 5/18, C08K 5/09, C08K 3/22, C08K 3/06, C08K 5/098, C08K 5/31, C08K 5/47;**
**C08L 15/00, C08L 9/00, C08L 45/02, C08L 91/06, C08K 3/04, C08K 3/36, C08K 5/548, C08K 5/18, C08K 5/09, C08K 3/22, C08K 3/06, C08K 5/098, C08K 5/31, C08K 5/47;**
C08F 236/06, C08F 212/08

## Description

TECHNICAL FIELD

The present disclosure relates to a pneumatic tire.

BACKGROUND ART

In recent years, environmental performance has become more and more important and the demand for lighter tires has been increasing. A possible technique for reducing tire weight is to reduce the number of carcass plies in a carcass. However, this technique generally has the problem of lowering tire physical properties such as durability and abrasion resistance.

Moreover, the demand for all-season tires that are usable in any season or at any atmospheric temperature has also been increasing. For example, there is a need to provide good tire physical properties while ensuring handling stability on an extremely cold road.

Patent Literature 1 proposes a tire which includes specific beads to achieve good durability and good abrasion resistance while reducing an increase in mass. Nevertheless, other techniques and further improvement are desired.

CITATION LIST

PATENT LITERATURE

Patent Literature 1: JP 2018-83475 A

SUMMARY OF DISCLOSURE

TECHNICAL PROBLEM

The present disclosure aims to solve the above problem and provide a pneumatic tire having excellent abrasion resistance and excellent handling stability on a cold road while having a reduced weight.

SOLUTION TO PROBLEM

The present disclosure relates to a pneumatic tire, including: a tread having a hardness at -20°C of 90 or less, a hardness at 30°C of 60 or more, and a maximum thickness of 8.5 mm or less; and a carcass consisting of one carcass ply.

Preferably, the tread is formed from a tread rubber composition which contains at least one rubber component including a styrene-butadiene rubber and at least one filler.

ADVANTAGEOUS EFFECTS OF DISCLOSURE

The present disclosure provides a pneumatic tire including a tread having a hardness at -20°C of 90 or less, a hardness at 30°C of 60 or more, and a maximum thickness of 8.5 mm or less, and a carcass consisting of one carcass ply to have excellent abrasion resistance and excellent handling stability on an extremely cold road while having a reduced weight.

BRIEF DESCRIPTION OF DRAWINGS

Fig. 1 is a cross-sectional view showing a part of a pneumatic tire.
Fig. 2 is an enlarged cross-sectional view showing the vicinity of a tread 4 of the tire 2 in Fig. 1.

DESCRIPTION OF EMBODIMENTS

The pneumatic tire according to the present disclosure includes a tread having a hardness at -20°C of 90 or less, a hardness at 30°C of 60 or more, and a maximum thickness of 8.5 mm or less, and a carcass consisting of one carcass ply. Such a pneumatic tire is provided with excellent abrasion resistance and excellent handling stability on an extremely cold road while having a reduced weight.

The reason for the above-mentioned advantageous effect is not clear but is believed to be as follows.

If a tread becomes hard when contacting an extremely cold road, the cornering force will be increased. Moreover, if a tire has a structure which includes one carcass (case) and a thin tread and thus has overall low rigidity, the handling stability will be reduced. According to the present disclosure, a tread has a relatively soft hardness of 90 or less at a low temperature (-20°C) and thus can ensure handling stability in an extremely cold region. In addition, the tread has a relatively hard hardness of 60 or more at 30°C and thus can also ensure durability such as abrasion resistance, despite the thin tire having a maximum tread thickness of 8.5 mm, thereby maintaining the tire life. Therefore, it is believed that the tire is provided with excellent abrasion resistance and excellent handling stability on an extremely cold road while having a reduced weight.

Thus, the tire solves the problem (purpose) of providing excellent abrasion resistance and excellent handling stability on an extremely cold road while having a reduced weight by its structure which includes a tread having a hardness at -20°C of 90 or less, a hardness at 30°C of 60 or more, and a maximum thickness of 8.5 mm or less, and a carcass consisting of one carcass ply. In other words, the structure including a tread having a hardness at -20°C of 90 or less, a hardness at 30°C of 60 or more, and a maximum thickness of 8.5 mm or less, and a carcass consisting of one carcass ply does not define the problem (purpose), and the problem herein is to provide excellent abrasion resistance and excellent handling stability on an extremely cold road while having a reduced weight. In order to provide a solution to this problem, the structure satisfying these parameters has been devised.

Examples of techniques for satisfying the hardness at -20°C of 90 or less and the hardness at 30°C of 60 or more, in other words, techniques for providing a relatively small difference between the hardness at an extremely low temperature (-20°C) and the hardness at an ordinary temperature (30°C), include: (a) a method of using a styrene-butadiene rubber having a wide molecular weight distribution; (b) a method of reducing the oil content; (c) a method of controlling the polybutadiene rubber content; (d) a method of controlling the mixing ratio of styrene-butadiene and polybutadiene rubbers; (e) a method of using a liquid resin; and other methods, which methods may be used alone or as an appropriate combination.

Moreover, examples of techniques for reducing the hardness at -20°C include: a method of using an oil extended styrene-butadiene copolymer as a styrene-butadiene rubber; a method of using a styrene-butadiene rubber having a lower Mw; a method of using a styrene-butadiene rubber having a wider Mw/Mn; a method of using a styrene-butadiene rubber having a lower styrene content; a method of using a styrene-butadiene rubber having a lower vinyl content; a method of reducing the styrene-butadiene rubber content; a method of increasing the polybutadiene rubber content; a method of reducing the filler content; using a silica having a lower $N_2SA$; and a method of increasing the liquid resin content.

Examples of techniques for increasing the hardness at 30°C include: a method of using an oil extended styrene-butadiene copolymer as a styrene-butadiene rubber; a method of using a styrene-butadiene rubber having a higher Mw; a method of increasing the filler content; a method of using a silica having a higher $N_2SA$; and a method of reducing the liquid resin content.

The present disclosure is described in detail below based on one exemplary preferred embodiment with appropriate reference to drawings.

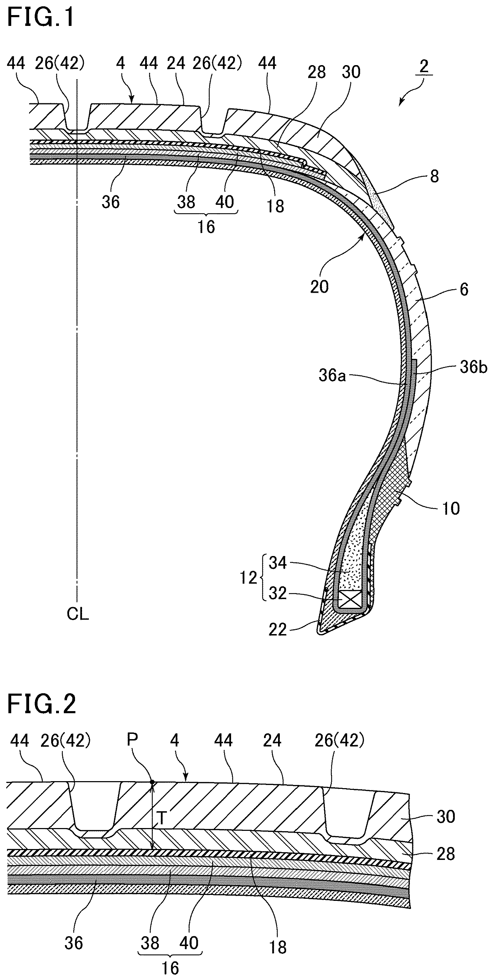

Fig. 1 shows a pneumatic tire 2. In Fig. 1, the vertical direction corresponds to the radial direction of the tire 2, the horizontal direction corresponds to the axial direction of the tire 2, and the direction perpendicular to this paper corresponds to the circumferential direction of the tire 2. In Fig. 1, the dash-dot-dash line CL represents the equatorial plane of the tire 2. The shape of the tire 2 is symmetrical to the equatorial plane, except for the tread pattern.

The tire 2 includes a tread 4, a pair of sidewalls 6, a pair of wings 8, a pair of clinches 10, a pair of beads 12, a carcass 14, a belt 16, a band 18, an innerliner 20, and a pair of chafers 22. The tire 2 is a tubeless tire. The tire 2 may be mounted on a passenger vehicle.

The tread 4 has a radially outwardly convex shape. The tread 4 forms a tread surface 24 that will contact a road. The tread 4 has grooves 26 engraved thereon. The grooves 26 define a tread pattern. The tread 4 includes a base layer 28 and a cap layer 30. The cap layer 30 is located radially outward of the base layer 28. The cap layer 30 is stacked on the base layer 28. The base layer 28 is formed of a crosslinked rubber having excellent adhesion. The base material rubber for the base layer 28 is typically a natural rubber. The cap layer 30 is formed of a crosslinked rubber having excellent properties such as abrasion resistance and handling stability on a cold road.

From the standpoint of handling stability on an extremely cold road, the (crosslinked) cap layer 30 has a hardness (Hs) at -20°C of 90 or lower, preferably 83 or lower, more preferably 81 or lower, still more preferably 78 or lower. The lower limit is not limited, but from the standpoint of ensuring handling stability on a cold road, it is preferably 70 or higher, more preferably 72 or higher, still more preferably 74 or higher.

From the standpoint of handling stability on an extremely cold road, the (crosslinked) cap layer 30 has a hardness (Hs) at 30°C of 60 or higher, preferably 62 or higher, more preferably 64 or higher, still more preferably 65 or higher. The upper limit is not limited, but from the standpoints of dry and wet grip performances, it is preferably 75 or lower, more preferably 73 or lower, still more preferably 71 or lower.

In the example shown in Fig. 1, the tread 4 has a two-layer structure including the cap layer 30 and the base layer

28. In the case of a tread 4 having a monolayer structure, the monolayer tread 4 satisfies the above-defined hardness. In the case of a tread 4 having a three or more layer structure, the cap layer 30 (outermost surface layer) satisfies the above-defined hardness.

In principle, specimens for analysis of physical properties are cut out of the tire 2. If specimens cannot be cut out of the tire 2, a sheet that reproduces the conditions of the tire component in the tire 2 is prepared from which specimens are cut out and used. The hardness may be measured using a type A durometer in accordance with JIS K6253-3 (2012) "Rubber, vulcanized or thermoplastic - Determination of hardness- Part 3: Durometer method".

The cap layer 30 (the monolayer tread for the tread 4 having a monolayer structure or the cap layer (outermost surface layer) for the tread 4 having a three or more layer structure) may be formed from, for example, a tread rubber composition (cap layer rubber composition) which contains one or more rubber components including a styrene-butadiene rubber and one or more fillers.

Any SBR may be used in the cap layer 30. Examples include those commonly used in the tire industry, such as emulsion-polymerized SBR (E-SBR) and solution-polymerized SBR (S-SBR). These may be used alone, or two or more of these may be used in combination.

The amount of the SBR based on 100% by mass of the rubber components in the tread rubber composition (cap layer rubber composition) is preferably 30% by mass or more, more preferably 40% by mass or more, still more preferably 50% by mass or more, particularly preferably 60% by mass or more. The upper limit is preferably 90% by mass or less, more preferably 80% by mass or less, still more preferably 75% by mass or less, particularly preferably 70% by mass or less. When the amount is within the range indicated above, excellent abrasion resistance and excellent handling stability on an extremely cold road tend to be provided while having a reduced weight.

The weight average molecular weight (Mw) of the SBR is preferably 300,000 or more, more preferably 600,000 or more, still more preferably 800,000 or more, particularly preferably 850,000 or more, most preferably 900,000 or more, while it is preferably 1,500,000 or less, more preferably 1,300,000 or less, still more preferably 1,100,000 or less, particularly preferably 950,000 or less. When the Mw is within the range indicated above, excellent abrasion resistance and excellent handling stability on an extremely cold road tend to be provided while having a reduced weight.

The ratio (Mw/Mn) of the weight average molecular weight (Mw) to the number average molecular weight (Mn) of the SBR is preferably 1.5 or higher, more preferably 2.0 or higher, still more preferably 2.2 or higher, particularly preferably 2.6 or higher, while it is preferably 6.0 or lower, more preferably 4.0 or lower, still more preferably 3.0 or lower. When the ratio is within the range indicated above, excellent abrasion resistance and excellent handling stability on an extremely cold road tend to be provided while having a reduced weight.

The styrene content of the SBR is preferably 25% by mass or higher, more preferably 28% by mass or higher, still more preferably 30% by mass or higher, particularly preferably 33% by mass or higher, while it is preferably 50% by mass or lower, more preferably 45% by mass or lower, still more preferably 40% by mass or lower, particularly preferably 35% by mass or lower. When the styrene content is within the range indicated above, excellent abrasion resistance and excellent handling stability on an extremely cold road tend to be provided while having a reduced weight.

The vinyl content of the SBR is preferably 20% by mass or higher, more preferably 25% by mass or higher, still more preferably 30% by mass or higher, particularly preferably 34% by mass or higher, while it is preferably 60% by mass or lower, more preferably 50% by mass or lower, still more preferably 45% by mass or lower, particularly preferably 42% by mass or lower. When the vinyl content is within the range indicated above, excellent abrasion resistance and excellent handling stability on an extremely cold road tend to be provided while having a reduced weight.

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards. The cis content (cis-1,4-butadiene unit content) and the vinyl content (1,2-butadiene unit content) can be determined by infrared absorption spectrometry. The styrene content can be determined by $^{1}$H-NMR analysis.

The SBR may suitably be an oil extended styrene-butadiene copolymer. The oil extended styrene-butadiene copolymer is prepared by extending a styrene-butadiene copolymer with an extender oil. Thus, by containing an oil extended styrene-butadiene copolymer which has previously been extended with an extender oil, it is possible to enhance dispersion of the extender oil and fillers in the rubber components as compared to that of a rubber composition prepared by kneading an oil during its compounding.

The oil extended styrene-butadiene copolymer is preferably one into which a branched structure is introduced. Examples of the styrene-butadiene copolymer into which a branched structure is introduced include polymers whose chain end is modified with at least one polyfunctional coupling agent selected from the group consisting of epoxy compounds, halogen-containing silicon compounds, and alkoxysilane compounds, and polymers having been polymerized in the presence of a small amount of at least one branching agent. Preferred among these are polymers whose chain end is modified with at least one polyfunctional coupling agent.

The styrene-butadiene copolymer may be prepared, for example, by copolymerizing styrene and butadiene using a polymerization initiator. The polymerization initiator is preferably a lithium-based initiator. The lithium-based

initiator is preferably an organic lithium compound. Examples of the organic lithium compound include alkyllithiums such as n-butyllithium, sec-butyllithium, and t-butyllithium; alkylenedilithiums such as 1,4-dilithiumbutane; aromatic hydrocarbon lithiums such as phenyllithium, stilbene lithium, diisopropenylbenzene lithium, and reaction products of alkyllithiums (e.g., butyllithium) and divinylbenzene or the like; polynuclear hydrocarbon lithiums such as lithium naphthalene; aminolithium; and tributyltin lithium.

The polymerization may be carried out optionally using an ether compound, amine, or the like as a styrene randomizer for copolymerization or as a vinyl bond content regulator. Examples of the ether compound, amine, or the like include dimethoxybenzene, tetrahydrofuran, dimethoxyethane, diethylene glycol dibutyl ether, diethylene glycol dimethyl ether, triethylamine, pyridine, N-methylmorpholine, N,N,N',N'-tetramethylethylenediamine, and dipiperidinoethane. Moreover, activators such as potassium dodecylbenzenesulfonate, potassium linolenate, potassium benzoate, potassium phthalate, and potassium tetradecylbenzenesulfonate may also be used for the same purpose.

The polymerization solvent used may be n-hexane, cyclohexane, heptane, benzene, or the like. The polymerization may be conducted either in a batch or continuous mode, but the continuous mode is preferred in order to suitably obtain a styrene-butadiene copolymer having the above-mentioned properties. The polymerization conditions are as follows: the polymerization temperature is usually 0 to 130°C, preferably 10 to 100°C; and the polymerization time is usually five minutes to 24 hours, preferably 10 minutes to 10 hours. The monomer concentration in the polymerization solvent (total monomer/(total monomer + polymerization solvent)) is usually 5 to 50% by mass, preferably 10 to 35% by mass.

Generally, when a lithium-based initiator is used, the rate of polymerization of styrene is different from that of butadiene. Moreover, the rates of polymerization of these monomers can be affected by the polymerization temperature and the monomer concentration. Thus, in the latter half of a simple reaction where the polymerization temperature is increased, many styrene molecules may be reacted due to the polymerization temperature and the high styrene monomer concentration to form many long styrene chains, resulting in an increased proportion of long styrene chains. Hence, the proportion of single styrene chains and the proportion of long styrene chains may be adjusted to appropriate values, for example, by controlling the polymerization temperature so that styrene and butadiene can react at the same rate, or by starting the reaction with a reduced amount of butadiene charged before the reaction to increase the styrene intake at the initial stage of polymerization, and then continuously introducing the reduced portion of butadiene.

A specific example of a method for introducing a branched structure into a styrene-butadiene copolymer includes, in the case of modification with a polyfunctional coupling agent, reacting an active polymer having an active lithium terminal produced by batch or continuous polymerization with at least one polyfunctional coupling agent selected from the group consisting of halogen-containing silicon compounds such as silicon tetrachloride, alkoxysilane compounds, alkoxysilane sulfide compounds, (poly)epoxy compounds, urea compounds, amide compounds, imide compounds, thiocarbonyl compounds, lactam compounds, ester compounds, and ketone compounds, among which halogen-containing silicon compounds such as silicon tetrachloride, alkoxysilane compounds, alkoxysilane sulfide compounds, and (poly)epoxy compounds are preferred, with halogen-containing silicon compounds, alkoxysilane compounds, and (poly) epoxy compounds being more preferred. Alternatively in the case of polymerization in the presence of a small amount of a branching agent, examples of the branching agent include divinylbenzene. The introduced amount is preferably 10% by mass or less based on 100% by mass of the styrene-butadiene copolymer.

Examples of the extender oil used for the extension of the styrene-butadiene copolymer include naphthenic extender oils, paraffinic extender oils, and aromatic extender oils. Aromatic extender oils are preferred among these. Moreover, naphthenic or paraffinic rubber extender oils may also be used in combination. The oil extension may be carried out, for example, by adding an extender oil after completion of the polymerization, followed by solvent removal and drying by conventional methods.

The amount of the extender oil based on 100 parts by mass of the styrene-butadiene copolymer is preferably 5 to 50 parts by mass, more preferably 10 to 50 parts by mass, still more preferably 30 to 50 parts by mass.

The SBR may be an unmodified or modified SBR.

Any modified SBR having a functional group interactive with a filler such as silica may be used. Examples include a chain end-modified SBR obtained by modifying at least one chain end of a SBR with a compound (modifier) having the functional group (a chain end-modified SBR terminated with the functional group); a backbone-modified SBR having the functional group in the backbone; a backbone- and chain end-modified SBR having the functional group in both the backbone and chain end (e.g., a backbone- and chain end-modified SBR in which the backbone has the functional group, and at least one chain end is modified with the modifier); and a chain end-modified SBR into which a hydroxy or epoxy group has been introduced by modification (coupling) with a polyfunctional compound having two or more epoxy groups in the molecule. These may be used alone, or two or more of these may be used in combination.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may have a substituent. Preferred among these are amino groups (preferably amino groups whose hydrogen atom is replaced with a C1-C6 alkyl

group), alkoxy groups (preferably C1-C6 alkoxy groups), alkoxysilyl groups (preferably C1-C6 alkoxysilyl groups), and amido groups.

SBR products manufactured or sold by Sumitomo Chemical Co., Ltd., JSR Corporation, Asahi Kasei Corporation, Zeon Corporation, etc. may be used as the SBR.

Examples of rubber components other than SBR that may be used in the tread rubber composition (cap layer rubber composition) include diene rubbers such as isoprene-based rubbers, polybutadiene rubbers (BR), acrylonitrile-butadiene rubbers (NBR), chloroprene rubbers (CR), butyl rubbers (IIR), and styrene-isoprene-butadiene copolymer rubbers (SIBR). Examples of the isoprene-based rubbers include natural rubbers (NR), polyisoprene rubbers (IR), refined NR, modified NR, and modified IR. From the standpoint of properties such as abrasion resistance, BR is preferred among these. The rubber components such as SBR may be used alone or in combinations of two or more.

The amount of the BR based on 100% by mass of the rubber components in the tread rubber composition (cap layer rubber composition) is preferably 10% by mass or more, more preferably 20% by mass or more, still more preferably 25% by mass or more, particularly preferably 30% by mass or more. When the amount is not lower than the lower limit, good properties such as abrasion resistance tend to be obtained. The upper limit of the amount is preferably 70% by mass or less, more preferably 60% by mass or less, still more preferably 50% by mass or less, particularly preferably 40% by mass or less. When the amount is not higher than the upper limit, the SBR content tends to be ensured so that good properties such as handling stability on an extremely cold road can be obtained.

Any BR may be used, and examples include high-cis BR and syndiotactic polybutadiene crystal-containing BR. The BR may be either an unmodified or modified BR. Examples of the modified BR include those into which the above-mentioned functional groups are introduced. These may be used alone, or two or more of these may be used in combination. In particular, BR having a cis content of 90% by mass or higher, preferably 95% by mass or higher, is suitable to enhance abrasion resistance. The cis content can be measured by infrared absorption spectrometry.

The BR may be commercially available from Ube Industries, Ltd., JSR Corporation, Asahi Kasei Corporation, Zeon Corporation, etc.

Examples of the fillers include those known in the rubber field, such as silica, carbon black, calcium carbonate, talc, alumina, clay, aluminum hydroxide, aluminum oxide, and mica. Silica or carbon black is preferred among these.

Examples of the silica usable in the tread rubber composition (cap layer rubber composition) include dry silica (anhydrous silica) and wet silica (hydrous silica). Wet silica is preferred among these because it has a large number of silanol groups.

The amount of the silica per 100 parts by mass of the rubber components in the tread rubber composition (cap layer rubber composition) is preferably 50 parts by mass or more, more preferably 60 parts by mass or more, still more preferably 70 parts by mass or more, particularly preferably 80 parts by mass or more, most preferably 100 parts by mass or more. When the amount is not less than the lower limit, good properties such as abrasion resistance tend to be obtained. The upper limit of the amount is preferably 170 parts by mass or less, more preferably 150 parts by mass or less, still more preferably 140 parts by mass or less, particularly preferably 135 parts by mass or less. When the amount is not more than the upper limit, good dispersion tends to be obtained.

The nitrogen adsorption specific surface area ($N_2SA$) of the silica is preferably 50 $m^2/g$ or more, more preferably 80 $m^2/g$ or more, still more preferably 90 $m^2/g$ or more, particularly preferably 115 $m^2/g$ or more. When the $N_2SA$ is not less than the lower limit, good properties such as abrasion resistance tend to be obtained. The $N_2SA$ of the silica is also preferably 200 $m^2/g$ or less, more preferably 150 $m^2/g$ or less, still more preferably 130 $m^2/g$ or less. When the $N_2SA$ is not more than the upper limit, good dispersion tends to be obtained.

The $N_2SA$ of the silica is measured by a BET method in accordance with ASTM D3037-93.

The silica may be commercially available from Degussa, Rhodia, Tosoh Silica Corporation, Solvay Japan, Tokuyama Corporation, etc.

The center rubber composition preferably contains one or more silane coupling agents together with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, and bis(3-trimethoxysilylpropyl)tetrasulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane and 3-chloropropyltriethoxysilane. Sulfide or mercapto silane coupling agents are preferred among these.

The silane coupling agents may be commercially available from Degussa, Momentive, Shin-Etsu Silicone, Tokyo Chemical Industry Co., Ltd., AZmax. Co., Dow Corning Toray Co., Ltd., etc. The amount of the silane coupling agents per 100 parts by mass of the silica is preferably about 3 to 25 parts by mass.

Any carbon black, including GPF, FEF, HAF, ISAF, and SAF, may be used in the tread rubber composition (cap layer rubber composition). Commercial products available from Asahi Carbon Co., Ltd., Cabot Japan **K.K.,** Tokai Carbon

Co., Ltd., Mitsubishi Chemical Corporation, Lion Corporation, NSCC Carbon Co., Ltd., Columbia Carbon, etc. may be used. The incorporation of carbon black provides reinforcement and thus can significantly improve properties such as abrasion resistance.

The amount of the carbon black per 100 parts by mass of the rubber components in the tread rubber composition (cap layer rubber composition) is preferably 1 part by mass or more, more preferably 3 parts by mass or more, still more preferably 5 parts by mass or more. When the amount is not less than the lower limit, the effect of the incorporation of carbon black tends to be obtained. The amount of the carbon black is also preferably 15 parts by mass or less, more preferably 10 parts by mass or less. When the amount is not more than the upper limit, good dispersion tends to be obtained.

The nitrogen adsorption specific surface area ($N_2SA$) of the carbon black in the tread rubber composition (cap layer rubber composition) is preferably 50 $m^2/g$ or more, more preferably 70 $m^2/g$ or more, still more preferably 85 $m^2/g$ or more, particularly preferably 96 $m^2/g$ or more. When the $N_2SA$ is not less than the lower limit, good reinforcement tends to be obtained. The upper limit of the $N_2SA$ of the carbon black is not limited, but it is preferably 150 $m^2/g$ or less, more preferably 120 $m^2/g$ or less, still more preferably 110 $m^2/g$ or less.

The nitrogen adsorption specific surface area of the carbon black is determined in accordance with the method A stipulated in JIS K6217.

The tread rubber composition (cap layer rubber composition) preferably contains one or more resins. Examples of usable resins include liquid resins (resins that are liquid at room temperature (25°C)) and solid resins (resins that are solid at room temperature (25°C)).

The amount of the resins per 100 parts by mass of the rubber components in the tread rubber composition (cap layer rubber composition) is preferably 2 parts by mass or more, more preferably 4 parts by mass or more, still more preferably 5 parts by mass or more, particularly preferably 10 parts by mass or more. When the amount is not less than the lower limit, good properties such as handling stability on an extremely cold road tend to be obtained. Moreover, the upper limit of the amount of the resins is not limited, but from the standpoint of abrasion resistance it is preferably 30 parts by mass or less, more preferably 20 parts by mass or less, still more preferably 15 parts by mass or less. The amount of liquid resins is also suitably in the range as indicated above.

From the standpoint of properties such as handling stability on an extremely cold road, liquid resins may be preferably used as the resins in the tread rubber composition (cap layer rubber composition). The liquid resins refer to thermoplastic resins which usually have a weight average molecular weight of several hundreds to several thousands and which may be incorporated with rubber components such as natural rubbers or synthetic rubbers to impart tackiness. Examples of the liquid resins include liquid petroleum or coal resins such as coumarone-indene resins, indene resins, $\alpha$-methylstyrene resins, vinyltoluene resins, and polyisopentane resins. Other examples of the liquid resins include liquid natural resins such as coumarone resins, naphthene resins, phenolic resins, terpene resins, terpene-phenolic resins, rosin, rosin esters, hydrogenated rosin derivatives, and hydrogenated terpene resins; and liquid synthetic resins such as alkylphenol-formaldehyde resins, C5 petroleum resins, C9 petroleum resins, aliphatic petroleum resins, xylene-formaldehyde resins, phenol-modified C9 petroleum resins, carboxylic acid-modified C9 petroleum resins, and dicyclopentadiene-modified C9 petroleum resins. Preferred among these liquid resins is at least one selected from the group consisting of liquid coumarone-indene resins, liquid indene resins, and liquid $\alpha$-methylstyrene resins, more preferably from liquid coumarone-indene resins.

The coumarone-indene resins refer to resins that contain coumarone and indene as monomer components constituting the backbone (main chain) of the resins. Examples of monomer components which may be contained in the backbone in addition to coumarone and indene include styrene, $\alpha$-methylstyrene, methylindene, and vinyltoluene. The indene resins and the $\alpha$-methylstyrene resins refer to resins that contain indene and $\alpha$-methylstyrene, respectively, as a monomer component mainly constituting the backbone (main chain) of the resins.

The softening point of the liquid resins in the tread rubber composition (cap layer rubber composition) is preferably -30°C or higher, more preferably -25°C or higher, still more preferably -20°C or higher. When the softening point is not lower than the lower limit, good kneadability with the rubber components tends to be obtained. The softening point of the liquid resins is also preferably 15°C or lower, more preferably 5°C or lower, still more preferably -10°C or lower.

Herein, the softening point is determined in accordance with JIS K 6220 with a ring and ball softening point measuring apparatus and defined as the temperature at which the ball drops down.

The tread rubber composition (cap layer rubber composition) may contain one or more oils. From the standpoint of abrasion resistance, the amount of the oils per 100 parts by mass of the rubber components is preferably 40 parts by mass or less, more preferably 35 parts by mass or less, still more preferably 27 parts by mass or less. The lower limit is not limited, but it is preferably 5 parts by mass or more, more preferably 10 parts by mass or more, still more preferably 18 parts by mass or more, particularly preferably 22 parts by mass or more.

The amount of the oils includes the amount of the oils contained in the rubbers (oil extended rubbers), if used.

Examples of the oils include process oils and plant oils, and mixtures thereof. Examples of the process oils include paraffinic process oils, aromatic process oils, and naphthenic process oils. Examples of the plant oils include

castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone, or two or more of these may be used in combination. To better achieve the advantageous effect of the present disclosure, naphthenic process oils are preferred among these.

The oils may be commercially available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., etc.

The tread rubber composition (cap layer rubber composition) preferably contains sulfur.

The amount of the sulfur per 100 parts by mass of the rubber components is preferably 0.5 to 5.0 parts by mass, more preferably 0.7 to 3.0 parts by mass.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used.

The tread rubber composition (cap layer rubber composition) preferably contains one or more vulcanization accelerators. The amount of the vulcanization accelerators per 100 parts by mass of the rubber components is preferably 1.0 to 5.0 parts by mass, more preferably 1.5 to 4.5 parts by mass.

Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl) thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone, or two or more of these may be used in combination. Sulfenamide or guanidine vulcanization accelerators are preferred among these.

The tread rubber composition (cap layer rubber composition) may contain one or more waxes, antioxidants, stearic acid, zinc oxide, or organic crosslinking agents.

In the tire 2 shown in Fig. 1, the tread 4 has a maximum thickness of 8.5 mm or less.

Fig. 2 is an enlarged cross-sectional view showing the vicinity of the tread 4 of the tire 2 in Fig. 1. In Fig. 2, the vertical direction corresponds to the radial direction of the tire 2, the horizontal direction corresponds to the axial direction of the tire 2, and the direction perpendicular to this paper corresponds to the circumferential direction of the tire 2.

In Fig. 2, the symbol P denotes a point on a tread surface 24. The point P is located outward from the groove 26 which is located axially innermost. The double-sided arrow T denotes the thickness of the tread 4 measured at the point P. The thickness T is the sum of the thicknesses of the cap layer 30 and the base layer 28 measured at the point P. The thickness T is measured along the normal of the tread surface 24 at the point P. Figs. 1 and 2 show an example of a two-layer tread 4 including a cap layer 30 and a base layer 28; however, in the case of a monolayer tread 4, the thickness T of the tread is the thickness of the monolayer tread measured at the point P, while in the case of a three or more layer tread, the thickness T of the tread is the sum of the thicknesses of the three or more layers measured at the point P, wherein the thickness T at the point P is also measured along the normal of the tread surface 24 at the point P.

Moreover, in Fig. 1, the maximum thickness of the tread 4 refers to the largest one among the tread thicknesses (in Fig. 1, the sums of the thicknesses of the cap and base layers 30 and 28) measured at each point on the tread surface 24, and is 8.5 mm or less. Such a maximum thickness enables weight reduction. Moreover, despite the weight reduction, good tire physical properties such as abrasion resistance and handling stability on an extremely cold road are provided. The maximum thickness of the tread 4 is preferably 8.0 mm or less, more preferably 7.5 mm or less, still more preferably 7.0 mm or less, particularly preferably 6.5 mm or less. From the standpoint of tire physical properties, the lower limit is preferably 5.5 mm or more, more preferably 6.0 mm or more.

In the tire 2 shown in Fig. 1, each sidewall 6 extends substantially radially inward from the end of the tread 4. The radially outer portion of the sidewall 6 is bonded to the tread 4. The radially inner portion of the sidewall 6 is bonded to the clinch 10. The sidewall 6 is formed of a crosslinked rubber having excellent cutting resistance and weather resistance. The sidewall 6 can prevent damages to the carcass 14.

Each wing 8 is located between the tread 4 and the sidewall 6. The wing 8 is bonded to both the tread 4 and the sidewall 6. The wing 8 is formed of a crosslinked rubber having excellent adhesion.

Each clinch 10 is located substantially radially inward of the sidewall 6. The clinch 10 is located outward from the bead 12 and the carcass 14 in the axial direction. The clinch 10 is formed of a crosslinked rubber having excellent abrasion resistance.

Each bead 12 is located axially inward of the clinch 10. The bead 12 includes a core 32 and an apex 34 that radially outwardly extends from the core 32. The core 32 has a ring shape and contains a wound non-stretchable wire. The material of the wire is typically steel. The apex 34 is radially outwardly tapered. The apex 34 is formed of a crosslinked rubber having high hardness.

The carcass 14 consists of a carcass ply 36. In the tire 2, the carcass 14 consists of one carcass ply 36, which makes it possible to achieve weight reduction.

In the tire 2, the carcass ply 36 extends between the beads 12 on opposite sides along the tread 4 and the sidewalls 6. The carcass ply 36 is folded around each core 32 from the inside to the outside in the axial direction. The thus folded carcass ply 36 is provided with a main portion 36a and a pair of folded portions 36b. Namely, the carcass ply 36 includes the main portion 36a and the pair of folded portions 36b.

Although not shown, the carcass ply 36 is formed of a large number of parallel cords and a topping rubber. The absolute value of the angle of each cord relative to the equatorial plane is suitably 75° to 90°. In other words, the carcass 14 preferably has a radial structure. The cords are formed from organic fibers. Preferred examples of the organic fibers include polyester fibers, nylon fibers, rayon fibers, polyethylene naphthalate fibers, and aramid fibers.

The belt 16 is located radially inward of the tread 4. The belt 16 is stacked on the carcass 14. The belt 16 reinforces the carcass 14. The belt 16 consists of an interior layer 38 and an exterior layer 40. As is clear from Fig. 1, the interior layer 38 is slightly wider in the axial direction than the exterior layer 40. In the tire 2, the axial width of the belt 16 is preferably at least 0.6 times but preferably not more than 0.9 times the cross-sectional width (see JATMA) of the tire 2.

Although not shown, the interior layer 38 and the exterior layer 40 are both formed of a large number of parallel cords and a topping rubber. In other words, the belt 16 contains a large number of parallel cords. Each cord is tilted relative to the equatorial plane. The absolute value of the tilt angle is generally at least 10° but not larger than 35°. The tilt direction of the cords in the interior layer 38 relative to the equatorial plane is opposite to the tilt direction of the cords in the exterior layer 40 relative to the equatorial plane. The material of the cords is preferably steel. The cords may contain organic fibers. In this case, examples of the organic fibers include polyester fibers, nylon fibers, rayon fibers, polyethylene naphthalate fibers, and aramid fibers.

The band 18 is located radially outward of the belt 16. The band 18 has a width that is equal to the width of the belt 16 in the axial direction. The band 18 may have a width larger than that of the belt 16.

Although not shown, the band 18 is formed of cords and a topping rubber. The cords are spirally wound. The band 18 has a so-called jointless structure. The cords extend substantially in the circumferential direction. The angle of the cords relative to the circumferential direction is 5° or smaller, or even 2° or smaller. The cords restrict the belt 16, thereby reducing lifting of the belt 16. The cords are formed from organic fibers. Preferred examples of the organic fibers include nylon fibers, polyester fibers, rayon fibers, polyethylene naphthalate fibers, and aramid fibers.

The belt 16 and the band 18 form a reinforcement layer. The reinforcement layer may be formed only of the belt 16.

The innerliner 20 is located inward of the carcass 14. The innerliner 20 is bonded to the inner surface of the carcass 14. The innerliner 20 is formed of a crosslinked rubber having excellent air shielding properties. The base material rubber for the innerliner 20 is typically a butyl rubber or halogenated butyl rubber. The innerliner 20 maintains the internal pressure of the tire 2.

Each chafer 22 is located near the bead 12. In this embodiment, the chafer 22 is formed of a cloth and a rubber impregnated in the cloth. The chafer 22 may be integrated with the clinch 10. In this case, the material of the chafer 22 is the same as that of the clinch 10.

In the tire 2, the grooves 26 in the tread 4 include main grooves 42. As shown in Fig. 1, the tread 4 has a plurality of, specifically three, main grooves 42 engraved thereon. The main grooves 42 are provided at intervals in the axial direction. Four ribs 44 extending in the circumferential direction are defined by the three main grooves 42 engraved on the tread 4. In other words, each main groove 42 is between one rib 44 and another rib 44.

The main grooves 42 extend in the circumferential direction. The main grooves 42 are continuous in the circumferential direction without interruption. The main grooves 42 can accelerate draining of water present between the road surface and the tire 2 in rainy weather, for example. Thus, the tire 2 can sufficiently contact the road surface even if it is wet. The main grooves 42 contribute to the wet grip of the tire 2.

In the production of the tire 2, a plurality of rubber-based components are assembled into a raw cover (unvulcanized tire 2). The raw cover is introduced into a mold. The outer surface of the raw cover abuts the cavity surface of the mold. The inner surface of the raw cover abuts a bladder or a core. The raw cover is pressurized and heated in the mold. The pressurization and heating cause the rubber compositions in the raw cover to flow. The heating causes rubber crosslinking reactions to give a tire 2. A mold having a concave/convex pattern on the cavity surface may be used to form the concave/convex pattern on the tire 2.

The pneumatic tire of the present disclosure may be used as a tire for passenger vehicles, large passenger vehicles, large SUVs, heavy duty vehicles such as trucks and buses, light trucks, motorcycles, or as a racing tire (high performance tire), for example. Moreover, the pneumatic tire can be used as an all-season tire, a summer tire, or a studless winter tire (winter tire), for example. Among these, the pneumatic tire is suitable for use as an all-season tire.

EXAMPLES

The present disclosure will be specifically described with reference to, but not limited to, examples.

The chemicals used in the examples and comparative examples are listed below.

SBR 1: Tufdene 3830 (solution-polymerized SBR, styrene content: 33% by mass, vinyl content: 34% by mass, Mw: 950,000, Mn: 370,000, Mw/Mn: 2.6, oil content: 37.5 parts by mass per 100 parts by mass of rubber solids) available from Asahi Kasei Corporation
SBR 2: SL563 (styrene content: 20% by mass, vinyl content: 55.5% by mass) available from JSR Corporation
SBR 3: Tufdene 4850 (solution-polymerized SBR, styrene content: 40% by mass, vinyl content: 45% by mass, Mw: 900,000, Mn: 300,000, Mw/Mn: 3.0, oil content: 50 parts by mass per 100 parts by mass of rubber solids) available from Asahi Kasei Corporation
SBR 4: Production Example 1 below
BR: BR150B (cis content: 98% by mass) available from Ube Industries, Ltd.
Carbon black: Diablack N339 ($N_2SA$: 96 $m^2/g$) available from Mitsubishi Chemical Corporation
Silica: Zeosil 115GR ($N_2SA$: 115 $m^2/g$) available from Solvay Japan
Silane coupling agent: Si69 (bis(3-triethoxysilylpropyl)tetrasulfide) available from Evonik Degussa
Liquid resin: Nitto Resin Coumarone L-20 ((liquid) copolymer of coumarone, indene, and styrene, softening point: -20 to -10°C, viscosity: 20 Pa·s) available from Nitto Chemical Co., Ltd.
Solid resin: SYLVARES SA85 (copolymer of $\alpha$-methylstyrene and styrene, Tg: 43°C, softening point: 85°C, Mw: 1,000) available from Arizona chemical
Antioxidant: Antigene 3C (N-phenyl-N'-isopropyl-p-phenylenediamine) available from Sumitomo Chemical Co., Ltd.
Stearic acid: TSUBAKI available from NOF Corporation
Zinc oxide: zinc oxide #1 available from Mitsui Mining & Smelting Co., Ltd.
Wax: Sunnoc N available from Ouchi Shinko Chemical Industrial Co., Ltd.
Processing aid: WB16 (mixture of fatty acid metal salt (fatty acid calcium salt, constituent fatty acid: C14-C20 saturated fatty acids) and fatty acid amide) available from Struktol
Sulfur (powdered sulfur available from Tsurumi Chemical Industry Co., Ltd.)
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (1,3-diphenylguanidine) available from Ouchi Shinko Chemical Industrial Co., Ltd.

[Production Example 1]

A sufficiently nitrogen-purged autoclave reactor having an internal volume of 20 L and equipped with a stirrer and a jacket was continuously charged with styrene at 10.5 g/min, 1,3-butadine containing 100 ppm of 1,2-butadiene at 19.5 g/min, cyclohexane at 150 g/min, tetrahydrofuran at 1.5 g/min, and n-butyllithium at 0.117 mmol/min while controlling the temperature at 70°C. Silicon tetrachloride was continuously fed at 0.04 mmol/min from the top outlet of the first reactor, and the mixture was introduced into a second reactor connected to the first reactor to perform a modification reaction. After completion of the modification reaction, 2,6-di-tert-butyl-p-cresol was added to the resulting polymer solution. Next, 37.5 phr (37.5 parts by mass per 100 parts of the rubber component) of "VIVATEC 500" (trade name, H&R) was added for oil extension, followed by solvent removal by steam stripping and then drying on a hot roll adjusted at 110°C to obtain an oil extended styrene-butadiene copolymer (SBR 4). The SBR 4 had a styrene content of 35% by mass, a vinyl content of 42% by mass, a Mw of 850,000, a Mw/Mn ratio of 2.2, and an oil content of 37.5 parts by mass per 100 parts by mass of the rubber solids.

(Examples and Comparative Examples)

According to each of the formulations shown in Table 1, the chemicals other than the sulfur and vulcanization accelerators were kneaded for five minutes at 150°C using a 1.7 L Banbury mixer (Kobe Steel, Ltd.) to give a kneaded mixture. Next, the sulfur and vulcanization accelerators were added to the kneaded mixture, and they were kneaded for five minutes at 80°C using an open roll mill to obtain an unvulcanized rubber composition. The unvulcanized rubber composition was formed into the shape of a cap tread and assembled with other tire components to build an unvulcanized tire. The unvulcanized tire was press-vulcanized at 170°C for 10 minutes to obtain a test all-season tire (size: 235/60R18) shown in Fig. 1 or 2.

The test all-season tires prepared as above were evaluated as described below. Table 1 shows the results.

<Hardness (Hs) of tread rubber>

Samples were collected from the cap layer of each test all-season tire. The hardness (JIS-A hardness) of the samples was measured using a type A durometer in accordance with JIS K6253-3 (2012) "Rubber, vulcanized or thermoplastic -Determination of hardness- Part 3: Durometer method". The measurement was carried out at 30°C and -20°C.

<Maximum thickness of tread>

The maximum thickness (the largest sum of the thickness of the cap layer and the thickness of the base layer) of the tread of each test all-season tire was measured.

<Extremely cold handling stability index>

The test all-season tires were mounted on a front-engine, rear-wheel-drive car of 2,000 cc displacement made in Japan. The handling performance was (subjectively) evaluated under conditions including an atmospheric temperature on ice of -22 to -18°C and a road surface temperature of -25 to -20°C. Specifically, a test driver subjectively evaluated the starting, acceleration, and stopping of the car. The subjective evaluation results were relative to Comparative Example 1 set equal to 100 and scored as follows: 110 when the driver judged that the performance was obviously enhanced; 120 when the performance was higher than ever before; and 90 when the performance was, conversely, obviously reduced.

<Tire life index>

The test all-season tires were mounted on the four wheels of a front-engine, rear-wheel-drive car of 2,000 cc displacement made in Japan. After 8,000 km of driving, the depth of the grooves on the tire tread portion was measured. The estimated life was calculated from the measurement results and expressed as an index using the equation below. A higher index indicates better abrasion resistance. Tires with an index of 95 or higher are practically acceptable.

$$\text{(Tire life index)} = \text{(Estimated life of each example or comparative example)}/\text{(Estimated life of Comparative Example 1)} \times 100$$

[Table 1]

| | | Example | | | | | | | | | | | | | | | | | | | Comparative Example | | |
|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 1 | 2 | 3 |
| Formulation contents | SBR 1 (oil content) | 96.25 (26.25) | 96.25 (26.25) | 96.25 (26.25) | – | – | – | | | | 82.5 (22.5) | 68.75 (18.75) | | 82.5 (22.5) | 82.5 (22.5) | 96.25 (26.25) | 96.25 (26.25) | 96.25 (26.25) | 96.25 (26.25) | 96.25 (26.25) | – | 96.25 (26.25) | 96.25 (26.25) |
| | SBR 2 | – | – | – | – | – | – | | | | – | – | | – | – | – | – | – | – | – | 80 | – | – |
| | SBR 3 (oil content) | – | – | – | 105 (35) | 105 (35) | 105 (35) | | | | – | – | | – | – | – | – | – | – | – | – | – | – |
| | SBR 4 (oil content) | – | – | – | – | – | – | 96.25 (26.25) | 96.25 (26.25) | 96.25 (26.25) | – | – | 68.75 (18.75) | – | – | – | – | – | – | – | – | – | – |
| | BR | 30 | 30 | 30 | 30 | 30 | 30 | 30 | 30 | 30 | 40 | 50 | 50 | 40 | 40 | 30 | 30 | 30 | 30 | 30 | 20 | 30 | 30 |
| | Carbon black | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| | Silica | 80 | 100 | 100 | 100 | 100 | 100 | 100 | 100 | 100 | 100 | 100 | 100 | 100 | 100 | 130 | 135 | 80 | 80 | 80 | 90 | 80 | 135 |
| | Silane coupling agent | 6.4 | 8.0 | 8.0 | 8.0 | 8.0 | 8.0 | 8.0 | 8.0 | 8.0 | 8.0 | 8.0 | 8.0 | 8.0 | 8.0 | 10.4 | 10.8 | 6.4 | 6.4 | 6.4 | 7.2 | 6.4 | 10.8 |
| | Liquid resin | 15 | 10 | 5 | 5 | 5 | – | 15 | 10 | 5 | 15 | 15 | 15 | 15 | 15 | 15 | 15 | 15 | 15 | 15 | 10 | 15 | 5 |
| | Solid resin | – | – | – | – | – | – | – | – | – | – | – | – | – | – | – | – | – | – | – | 20 | – | – |
| | Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Processing aid | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| | Sulfur | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 | 2.2 |
| Physical properties | Hardness of tread rubber (30°C) | 61 | 66 | 69 | 62 | 62 | 70 | 62 | 67 | 70 | 60 | 64 | 65 | 60 | 60 | 70 | 72 | 61 | 61 | 61 | 52 | 61 | 81 |
| | Hardness of tread rubber (−20°C) | 81 | 78 | 76 | 80 | 80 | 75 | 74 | 75 | 75 | 75 | 77 | 76 | 75 | 75 | 88 | 89 | 81 | 81 | 81 | 86 | 81 | 93 |
| Maximum thickness of tread (mm) | | 8.5 | 7.5 | 8.5 | 8.5 | 7.5 | 8.5 | 8.5 | 7.5 | 8.5 | 8.5 | 8.5 | 8.5 | 8.5 | 8.5 | 8.5 | 8.5 | 7.0 | 6.5 | 6.0 | 8.5 | 9.5 | 9.5 |
| Evaluation | Extremely cold handling stability index | 110 | 115 | 120 | 113 | 120 | 122 | 114 | 118 | 122 | 112 | 117 | 118 | 111 | 115 | 108 | 111 | 113 | 116 | 117 | 100 | 90 | 78 |
| | Tire life index | 105 | 108 | 113 | 107 | 110 | 114 | 108 | 110 | 114 | 115 | 130 | 132 | 115 | 116 | 106 | 110 | 105 | 99 | 95 | 100 | 107 | 105 |

Table 1 shows that the tires of the examples including a tread having a hardness at -20°C of 90 or less, a hardness at 30°C of 60 or more, and a maximum thickness of 8.5 mm or less, and a carcass consisting of one carcass ply had

excellent abrasion resistance and excellent handling stability on an extremely cold road while having a reduced weight. Examples 18 and 19 exhibited practically acceptable abrasion resistance despite their thin treads with maximum thicknesses of 6.5 mm and 6.0 mm, respectively.

REFERENCE SIGNS LIST

2 pneumatic tire
4 tread
6 sidewall
8 wing
10 clinch
12 bead
14 carcass
16 belt
18 band
20 innerliner
22 chafer
24 tread surface
26 groove
28 base layer
30 cap layer
32 core
34 apex
36 carcass ply
36a main portion
36b folded portion
38 interior layer
40 exterior layer
42 main groove
44 rib
CL equatorial plane of tire 2
P point on tread surface 24
T thickness of tread 4

## Claims

**1.** A pneumatic tire, comprising:

a tread having a hardness at -20°C of 90 or less, a hardness at 30°C of 60 or more, and a maximum thickness of 8.5 mm or less; and
a carcass consisting of one carcass ply,
wherein the hardness is a JIS-A hardness measured using a type A durometer in accordance with JIS K6253-3 (2012).

**2.** The pneumatic tire according to claim 1,
wherein the tread is formed from a tread rubber composition which comprises at least one rubber component including a styrene-butadiene rubber and at least one filler.

## Patentansprüche

**1.** Luftreifen, umfassend:

einen Laufstreifen mit einer Härte bei -20°C von 90 oder weniger, einer Härte bei 30°C von 60 oder mehr und einer maximalen Dicke von 8.5 mm oder weniger; und

eine Karkasse bestehend aus einer Karkasslage,
wobei die Härte eine unter Verwendung eines Durometers vom Typ A in Übereinstimmung mit JIS K6253-3 (2012) gemessene JIS-A-Härte ist.

**2.** Der Luftreifen nach Anspruch 1,
wobei der Laufstreifen aus einer Laufstreifenkautschukmischung gebildet ist die mindestens eine Kautschukkomponente enthaltend einen Styrol-Butadien-Kautschuk und mindestens einen Füllstoff umfasst.

## Revendications

**1.** Bandage pneumatique, comprenant :

une bande de roulement ayant une dureté à -20°C de 90 ou moins, une dureté à 30°C de 60 ou plus, et une épaisseur maximum de 8.5 mm ou moins ; et
une carcasse constitué d'une nappe de carcasse,
dans lequel la dureté est une dureté JIS-A mesurée en utilisant un duromètre de type A conformément à JIS K6253-3 (2012).

**2.** Bandage pneumatique selon la revendication 1,
dans lequel la bande de roulement est formée à partir d'une composition de caoutchouc de la bande de roulement qui comprend au moins un composant de caoutchouc incluant un caoutchouc de styrène-butadiène et au moins une charge.

FIG.1

44
26(42)
4
44
24
26(42)
44
28
30
2
8
36
38
40
16
18
20
6
36a
36b
10
12
34
32
22
CL

FIG.2

44
26(42)
P
4
44
24
26(42)
T
30
28
36
38
40
16
18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018083475 A